# EUROPEAN PATENT APPLICATION

(11) **EP 2 022 598 A1**
(43) Date of publication of application: **11.02.2009**
(21) Application number: 07740342.6
(22) Date of filing: 29.03.2007
(51) Int. Cl.: B23K 31/00, B23K 26/00, B23K 26/04, B23K 26/20, C21D 1/30, C21D 1/34, C21D 9/08, C21D 9/50, B23K 101/06

(54) **METHOD OF IMPROVING RESIDUAL STRESS IN TUBE BODY AND DEVICE FOR IMPROVING RESIDUAL STRESS**

(30) Priority: 05.04.2006 JP 2006103755
(71) Applicant: Mitsubishi Heavy Industries, Ltd., Tokyo 108-8215 (JP)
(72) Inventor: OTA, Takahiro, Takasago-shi Hyogo 676-8686 (JP); HEMMI, Yoshiyuki, Kobe-shi Hyogo 652-8585 (JP); ONITSUKA, Hironori, Kobe-shi Hyogo 652-8585 (JP); SUGIMOTO, Noriaki, Kobe-shi Hyogo 652-8585 (JP); KAMO, Kazuhiko, Takasago-shi Hyogo 676-8686 (JP); TSUBOTA, Shuho, Takasago-shi Hyogo 676-8686 (JP); MUROYA, Itaru, Takasago-shi Hyogo 676-8686 (JP)
(74) Representative: Henkel, Feiler & Hänzel
(86) International application number: PCT/JP2007/056904
(87) International publication number: WO 2007/116805

(57) **Abstract**

An obj ect is to provide a method and a system for improving a residual stress in a tube body, with which the residual stress can reliably be improved without heating excessively. From an irradiation start angle θs to a first predetermined angle θ1 on the tube body, an intensity of a laser beam is gradually increased from 0.5 to the steady output of 1.0 output ratio; from the first predetermined angle θ1 to a second predetermined angle θ2, the intensity of the laser beam is set at 1.0 output ratio; from the second predetermined angle θ2 to an irradiation end angle θe, the intensity of the laser beam is gradually decreased from the 1.0 output ratio to 0.5; and at the irradiation end angle θe, the intensity of the laser beam is set to 0. All these steps are performed at one turn of rotation in the method and the system for improving residual stress in the tube body.

## Description

### Technical Field

The present invention relates to a tube body residual stress improving method and a system to improve residual stress in a tube body such as a pipe.

### Background Art

In the case of laying tube bodies such as large pipes in nuclear power plants, large plants, and the like, removal of stress remaining in pipes at welding becomes an issue. Welding causes residual stress in a pipe, and the residual stress may shorten the life of the pipe. Accordingly, it is desirable to remove such residual stress caused by welding.

As a method of removing residual stress in a pipe, the induction heating stress improvement process (hereinafter, referred to as the IHSI process) has been proposed. According to the IHSI process, outer surface part of a pipe is increased in temperature by induction heating using a high frequency induction heating coil while the inner surface thereof is forcedly cooled by running water so that the pipe has a temperature gradient in a thickness direction near a part satisfying stress corrosion cracking (hereinafter, referred to as SCC) conditions. Thereafter, the heating is stopped while the cooling is maintained by flowing water on the inner surface until the pipe has a substantially uniform temperature in the thickness direction. As a result, residual tensile stress around the welded part is reduced or changed to compressive stress (Patent Documents 1 to 3).

As another method of removing residual stress in a pipe, a method is proposed in which the front surface of the pipe such as a stainless steel pipe is heated to the solution temperature or is melted by laser irradiation in order to reduce the residual stress in a rear surface (Patent Documents 4 to 7).
Patent Document 1: JP-A4-57-70095
Patent Document 2: JP-A4-2001-150178
Patent Document 3: JP-A4-10-272586
Patent Document 4: JP-A4-2003-004890
Patent Document 5: JP-A4-8-5773
Patent Document 6: JP-A4-2000-254776
Patent Document 7: JP-A4-2004-130314

### DISCLOSURE OF THE INVENTION

### PROBLEMS TO BE SOLVED BY THE INVENTION

In the IHSI process, there needs to be a difference in temperature of a certain value or more between the outer and inner surfaces of the pipe at the end of heating. Accordingly, the IHSI process is easily performed for a pipe which is already installed and whose inner surface can be cooled by running water but is hardly performed for a pipe which cannot hold running water inside. Moreover, the IHSI process performs high frequency induction heating to produce a temperature gradient in the thickness direction of the pipe. However, in the case of heating by the high frequency induction coil, the depth and range to which heat is transmitted depend on the material (dielectric constant) of the tube body, and the heated range is difficult to limit. Moreover, equipment for the IHSI is large and consumes a large amount of energy. Furthermore, it is difficult to provide a constant temperature gradient in the thickness direction, in the case of a dissimilar metal joint or the like, in which the pipe is composed of members having different dielectric constants.

In the aforementioned method in which the front surface of a pipe such as a stainless steel pipe is heated to the solution temperature or is melted by laser irradiation in order to reduce the residual stress in a rear surface, the pipe could be heated insufficiently or excessively. In the case of insufficient heating, the residual stress cannot be sufficiently improved, and the SCC cannot be reliably prevented. In the case of excessive heating, an area around the heated part is exposed to a sensitization temperature, adversely affecting the material itself. In such a case, oxidation scale is formed in the heated surface and needs to be removed. This may increase radiation exposure in the case of performance in a nuclear power plant. Especially in the case of welding pipes to each other, laser irradiation is performed in a linear form for the outer surface of the welded part with circumferential movement to reduce the residual stress. However, at start and end angles of laser irradiation, areas heated by the laser irradiation overlap on each other to excessively heat the pipe, and the pipe is thus exposed to the sensitization temperature, adversely affecting the material itself.

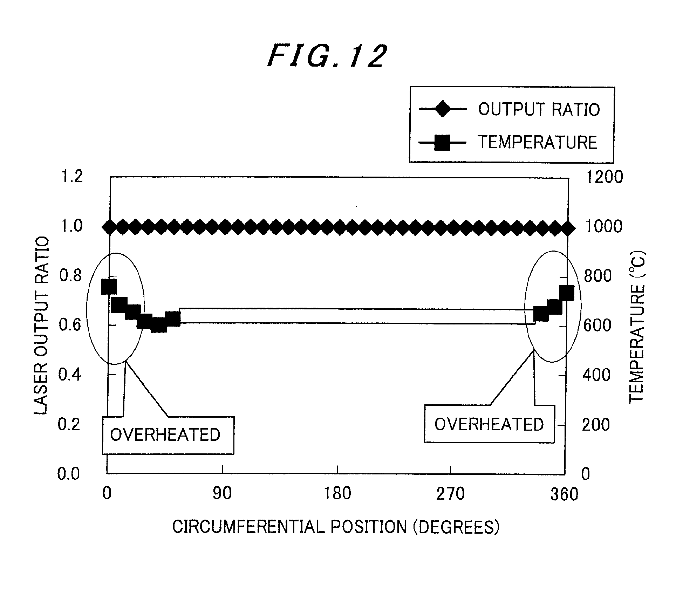

For example, when the start and end angles of laser irradiation are set to 0 and 360° as circumferential positions, respectively, and when the intensity of laser irradiation is constant (herein, the intensity allowing a desired heated temperature to be achieved at a predetermined rotational speed is set to 1.0), as shown in FIG. 12, there were overheated areas having a temperature of 100°C or more higher than the desired temperature at the start and end angles of laser irradiation.

The present invention has been made in the light of the aforementioned problems, and an object of the present invention is to provide tube body residual stress improving method and system capable of reliably improving residual stress without excessively heating the tube body.

### MEANS FOR SOLVING THE PROBLEMS

A tube-body residual stress improving method described in a first invention to solve the aforementioned problems is a tube-body residual stress improving method of locally irradiating an outer surface of a welded part with a laser beam while rotating an area irradiated with the laser beam at a predetermined rotational speed around an outer circumference of the tube body in order to heat the entire circumference of the welded part for an improvement of residual stress around the entire circumference of the welded part, the tube-body residual stress improving method comprising: an output increasing step of gradually increasing an intensity of the laser beam to a steady intensity from any one of 0 and an intensity smaller than the steady intensity during rotation from an irradiation start angle to a first predetermined angle on the tube body, the steady intensity allowing a desired heated temperature to be achieved at the predetermined rotational speed; a steady output step of keeping the intensity of the laser beam at the steady intensity during rotation from the first predetermined angle to a second predetermined angle short of an irradiation end angle which is the same as the irradiation start angle; an output decreasing step of gradually decreasing the intensity of the laser beam from the steady intensity to any one of 0 and an intensity smaller than the steady intensity during rotation from the second predetermined angle to the irradiation end angle; and an output stop step of causing the intensity of the laser beam to reach 0 at the irradiation end angle, wherein all of the steps are performed at one turn of rotation.

A tube-body residual stress improving method described in a second invention to solve the aforementioned problems is a tube-body residual stress improving method of locally irradiating an outer surface of a welded part with a laser beam while rotating an area irradiated with the laser beam at a predetermined rotational speed around an outer circumference of the tube body in order to heat the entire circumference of the welded part for an improvement of residual stress around the entire circumference of the welded part, the tube-body residual stress improving method comprising: an output increasing step of gradually increasing an intensity of the laser beam to a steady intensity from any one of 0 and an intensity smaller than the steady intensity during rotation from an irradiation start angle to a first predetermined angle on the tube body, the steady intensity allowing a desired heated temperature to be achieved at the predetermined rotational speed; a steady output step of keeping the intensity of the laser beam at the steady intensity during rotation from the first predetermined angle to an irradiation end angle which is the same as the irradiation start angle; and an output stop step of causing the intensity of the laser beam to reach 0 at the irradiation end angle, wherein all of the steps are performed at one turn of rotation.

A tube-body residual stress improving method described in a third invention to solve the aforementioned problems is a tube-body residual stress improving method of locally irradiating an outer surface of a welded part with a laser beam while rotating an area irradiated with the laser beam at a predetermined rotational speed around an outer circumference of the tube body in order to heat the entire circumference of the welded part for an improvement of residual stress around the entire circumference of the welded part, the tube-body residual stress improving method comprising: a steady output step of setting an intensity of the laser beam to a steady intensity at an irradiation start angle on the tube body and keeping the intensity of the laser beam at the steady intensity during rotation from the irradiation start angle to a second predetermined angle short of an irradiation end angle which is the same as the irradiation start angle, the steady intensity allowing a desired heated temperature to be achieved at the predetermined rotational speed; an output decreasing step of gradually decreasing the intensity of the laser beam from the steady intensity to any one of 0 and an intensity smaller than the steady intensity during rotation from the second predetermined angle to the irradiation end angle; and an output stop step of causing the intensity of the laser beam to reach 0 at the irradiation end angle, wherein all of the steps are performed at one turn of rotation.

A tube-body residual stress improving method described in a fourth invention to solve the aforementioned problems is a tube-body residual stress improving method of locally irradiating an outer surface of a welded part with a laser beam while rotating an area irradiated with the laser beam at a predetermined rotational speed around an outer circumference of the tube body in order to heat the entire circumference of the welded part for an improvement of residual stress around the entire circumference of the welded part, the tube-body residual stress improving method comprising: an output increasing step of gradually increasing an intensity of the laser beam from 0 to a steady intensity during rotation from an irradiation start angle to a first predetermined angle on the tube body, the steady intensity allowing a desired heated temperature to be achieved at the predetermined rotational speed; a steady output step of keeping the intensity of the laser beam at the steady intensity during rotation from the first predetermined angle to a second predetermined angle which is short of the start angle; and an output decreasing step of gradually decreasing the intensity of the laser beam from the steady intensity to 0 during rotation from the second predetermined angle to an irradiation end angle which is beyond the start angle, wherein all of the steps are performed at more than one and less than two turns, while angular ranges, of the tube body, respectively of the output increasing step and the output decreasing step partially overlap each other, and also a sum of the intensities of the laser beam of the intensity increasing and decreasing steps is set to a ratio of 0.8 to 0.9 to the steady intensity in the overlapped angular range.

A tube-body residual stress improving method described in a fifth invention to solve the aforementioned problems is the tube-body residual stress improving method according to any one of first to fourth inventions, wherein the cycle of all the steps is performed twice or more, and the heated tube body is cooled down to ambient temperature after each cycle, and the irradiation start and end angles on the tube body are shifted for each cycle.

A tube-body residual stress improving method described in a sixth invention to solve the aforementioned problems is the tube-body residual stress improving method according to the fifth invention, wherein a temperature sensor measuring the temperature of the tube body is provided only at an angular position of an edge of an angular range which is subjected to the steady output step in every cycle, and the maximum temperature of the tube body is monitored by using the temperature sensor at each cycle.

A tube-body residual stress improving system described in a seventh invention to solve the aforementioned problems comprises: rotary moving means capable of rotationally moving around an outer circumference of a cylindrical tube body at a predetermined rotational speed; laser beam irradiating means which is supported by the rotary moving means and which locally irradiates a laser beam onto an outer circumferential surface of a welded part of the tube body; and control means which controls an intensity of the laser beam from the laser beam irradiating means and which also controls circumferential angular position and the rotational speed of the laser beam irradiating means rotated by the rotary moving means, wherein the control means includes: an output increasing step of gradually increasing an intensity of the laser beam to a steady intensity from any one of 0 and an intensity smaller than the steady intensity during rotation from an irradiation start angle to a first predetermined angle on the tube body, the steady intensity allowing a desired heated temperature to be achieved at the predetermined rotational speed; a steady output step of setting the intensity of the laser beam to the steady intensity during rotation from the first predetermined angle to a second predetermined angle short of an irradiation end angle which is the same as the irradiation start angle; an output decreasing step of gradually decreasing the intensity of the laser beam from the steady intensity to any one of 0 and an intensity smaller than the steady intensity during rotation from the second predetermined angle to the irradiation end angle; and an output stop step of causing the intensity of the laser beam to reach 0 at the irradiation end angle, and the control means performs all of the steps at one turn to rotate an area irradiated with the laser beam on the outer circumference of the tube body, thereby heating the entire circumference of the welded part for an improvement of residual stress around the entire circumference of the welded part.

A tube-body residual stress improving system described in an eighth invention to solve the aforementioned problems comprises: rotary moving means capable of rotationally moving around an outer circumference of a cylindrical tube body at a predetermined rotational speed; laser beam irradiating means which is supported by the rotary moving means and which locally irradiates a laser beam onto an outer circumferential surface of a welded part of the tube body; and control means which controls an intensity of the laser beam from the laser beam irradiating means and which also controls circumferential angular position and the rotational speed of the laser beam irradiating means rotated by the rotary moving means, wherein the control means includes: an output increasing step of gradually increasing an intensity of the laser beam to a steady intensity from any one of 0 and an intensity smaller than the steady intensity during rotation from an irradiation start angle to a first predetermined angle on the tube body, the steady intensity allowing a desired heated temperature to be achieved at the predetermined rotational speed; a steady output step of keeping the intensity of the laser beam at the steady intensity during rotation from the first predetermined angle to an irradiation end angle which is the same as the irradiation start angle; and an output stop step of causing the intensity of the laser beam to reach 0 at the irradiation end angle, and the control means performs all of the steps at one turn to rotate an area irradiated with the laser beam on the outer circumference of the tube body, thereby heating the entire circumference of the welded part for an improvement of residual stress around the entire circumference of the welded part.

A tube-body residual stress improving system described in a ninth invention to solve the aforementioned problems comprises: rotary moving means capable of rotationally moving around an outer circumference of a cylindrical tube body at a predetermined rotational speed; laser beam irradiating means which is supported by the rotary moving means and which locally irradiates a laser beam onto an outer circumferential surface of a welded part of the tube body; and control means which controls an intensity of the laser beam from the laser beam irradiating means and which also controls circumferential angular position and the rotational speed of the laser beam irradiating means rotated by the rotary moving means, wherein the control means includes: a steady output step of setting an intensity of the laser beam to a steady intensity at an irradiation start angle on the tube body and keeping the intensity of the laser beam at the steady intensity during rotation from the irradiation start angle to a second predetermined angle short of an irradiation end angle which is the same as the irradiation start angle, the steady intensity allowing a desired heated temperature to be achieved at the predetermined rotational speed; an output decreasing step of gradually decreasing the intensity of the laser beam from the steady intensity to any one of 0 and an intensity smaller than the steady intensity during rotation from the second predetermined angle to the irradiation end angle; and an output stop step of causing the intensity of the laser beam to reach 0 at the irradiation end angle, and the control means performs all of the steps at one turn to rotate an area irradiated with the laser beam on the outer circumference of the tube body, thereby heating the entire circumference of the welded part for an improvement of residual stress around the entire circumference of the welded part.

A tube-body residual stress improving system described in a tenth invention to solve the aforementioned problems comprises: rotary moving means capable of rotationally moving around an outer circumference of a cylindrical tube body at a predetermined rotational speed; laser beam irradiating means which is supported by the rotary moving means and which locally irradiates a laser beam onto an outer circumferential surface of a welded part of the tube body; and control means which controls an intensity of the laser beam from the laser beam irradiating means and which also controls circumferential angular position and the rotational speed of the laser beam irradiating means rotated by the rotary moving means, wherein the control means includes: an output increasing step of gradually increasing an intensity of the laser beam from 0 to a steady intensity during rotation from an irradiation start angle to a first predetermined angle on the tube body, the steady intensity allowing a desired heated temperature to be achieved at the predetermined rotational speed; a steady output step of keeping the intensity of the laser beam at the steady intensity during rotation from the first predetermined angle to a second predetermined angle which is short of the irradiation start angle; and an output decreasing step of gradually decreasing the intensity of the laser beam from the steady intensity to 0 during rotation from the second predetermined angle to an irradiation end angle which is beyond the start angle, and the control means performs all of the steps at more than one and less than two turns to rotate an area irradiated with the laser beam on the outer circumference of the tube body, thereby heating the entire circumference of the welded part for an improvement of residual stress around the entire circumference of the welded part, while angular ranges, of the tube body, respectively of the output increasing step and the output decreasing step overlap each other, and also a sum of the intensities of the laser beam of the intensity increasing and decreasing steps is set to a ratio of 0.8 to 0.9 to the steady intensity in the overlapped angular range.

A tube body residual stress improving system described in an eleventh invention to solve the aforementioned problems is the tube-body residual stress improving system according to any one of the seventh to tenth inventions, wherein the control means performs the cycle of all of the steps twice or more and cools the heated tube body down to ambient temperature after each cycle while changing the start and end angles of irradiation to the tube body for each cycle.

A tube body residual stress improving system described in a twelfth invention to solve the aforementioned problems is a tube-body residual stress improving system according to the eleventh invention, wherein a temperature sensor measuring the temperature of the tube body is provided at an angular position at an edge of an angular range which is subjected to the steady output step in every cycle, and the control means monitors the maximum temperature of the tube body by using the temperature sensor at each cycle.

### EFFECTS OF THE INVENTION

According to the present invention, the intensity of laser irradiation is properly increased or decreased at the start and end angles of the laser irradiation at one turn of rotation. Accordingly, the tube body can be prevented from being excessively heated, and laser heating can reliably improve the residual stress (tensile stress) in the inner surface of the tube body due to welding. Moreover, the intensity of laser irradiation is properly increased and decreased at the start and end angles of laser irradiation at a plurality of cycles with the start and end angles being shifted for each cycle. It is therefore possible to obtain the uniform maximum temperature around the entire circumference of the tube body. Accordingly, SCC occurring in pipes laid at a nuclear plant and the like can be reliably prevented.

Furthermore, the temperature sensors are provided at only angular positions of the tube body which are subjected at every cycle to the steady output step of irradiating a laser beam with the steady intensity, which allows a desired heated temperature to be achieved at the predetermined rotational speed. Accordingly, overheating can be reliably monitored with a small number of temperature sensors.

### BRIEF DESCRIPTION OF DRAWINGS

FIG. 1 is a view explaining a tube body residual stress improving system according to the present invention and a principle thereof.
FIG. 2 is a view explaining an example of an embodiment (Embodiment 1) of a tube body residual stress improving method according to the present invention.
FIG. 3 is a view explaining another example of the embodiment (Embodiment 2) of the tube body residual stress improving method according to the present invention.
FIG. 4 is a view explaining still another example of the embodiment (Embodiment 3) of the tube body residual stress improving method according to the present invention.
FIG. 5 is a view explaining still another example of the embodiment (Embodiment 4) of the tube body residual stress improving method according to the present invention.
FIG. 6 is a view explaining still another example of the embodiment (Embodiment 5) of a tube body residual stress improving method according to the present invention.
FIG. 7 is a graph explaining laser beam intensity and heated temperature at one turn in the tube body residual stress improving method of Embodiment 5.
FIG. 8 is a graph verifying an effect of the tube body residual stress improving method of Embodiment 5 on improving residual stress.
FIG. 9 is a view explaining still another example of the embodiment (Embodiment 6) of the tube body residual stress improving method according to the present invention.
FIG. 10 is a graph explaining laser beam intensity and heated temperature at one turn in the tube body residual stress improving method of Embodiment 6.
FIG. 11 is a graph verifying an effect of the tube body residual stress improving method of Embodiment 6 on improving residual stress.
FIG. 12 is a graph explaining laser beam intensity and heated temperature in a conventional tube body residual stress improving system.

### EXPLANATION OF REFERENCE NUMERALS

- 1: RESIDUAL STRESS IMPROVING SYSTEM
- 2: PIPE
- 4: SUPPORT SECTION
- 5: OPTICAL HEAD
- 6: OPTICAL FIBER
- 7: LASER OSCILLATOR
- 8: CONTROLLER
- 9: TEMPERATURE SENSOR

### BEST MODE FOR CARRYING OUT THE INVENTION

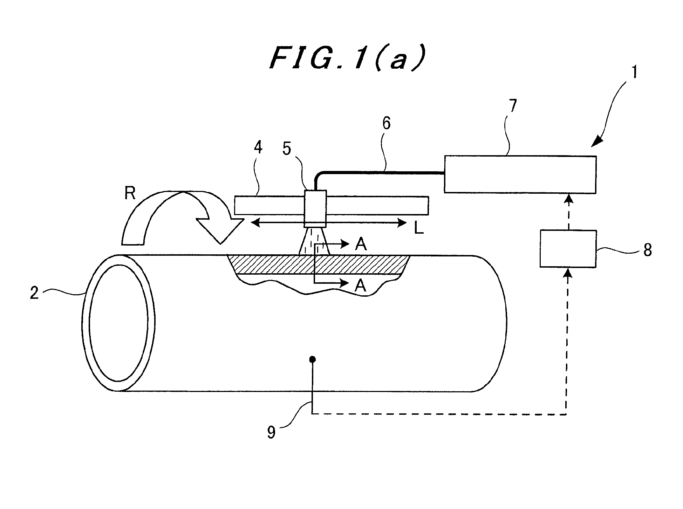

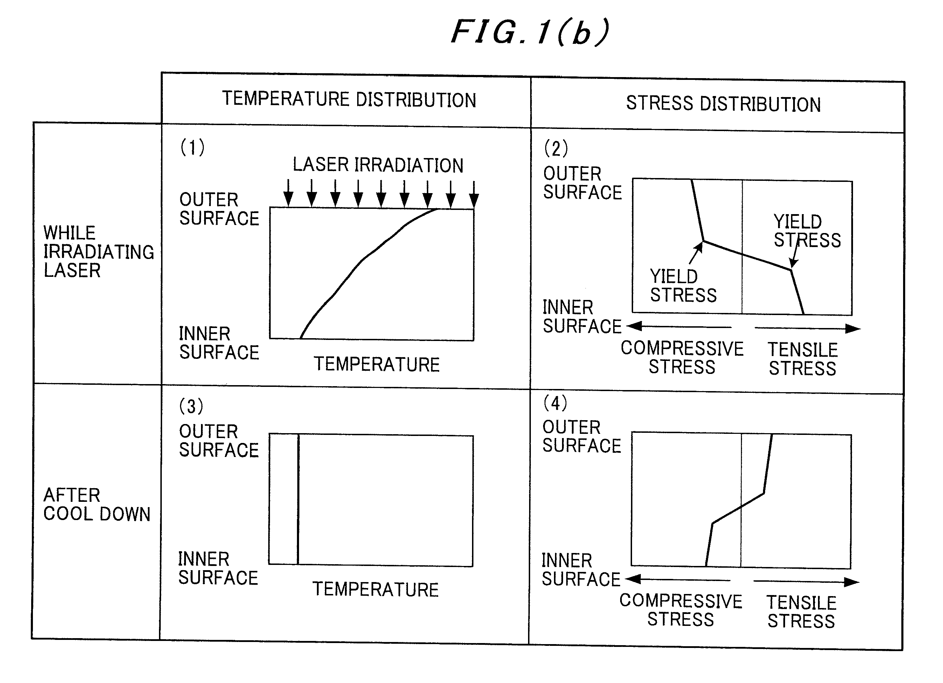

A description is given of tube body residual stress improving method and system according to the present invention in detail using FIGS. 1 to 11.

### EMBODIMENT 1

FIG. 1 is a view explaining a tube-body residual stress improving system according to the present invention and the principle thereof.
As shown in FIG. 1(a), a residual stress improving system 1 includes a support section 4, an optical head 5, a laser oscillator 7, and a controller 8. The support section 4 is extended in an axial direction L of a pipe 2 as a cylindrical tube body and can be rotated around the outer circumference of the pipe 2 coaxially with the pipe 2 by a not-shown rotary moving device. The optical head 5 is supported by the support section 4 and irradiates a laser beam onto a predetermined area of the outer circumferential surface of a welded part of the pipe 2. The laser oscillator 7 is connected to the optical head 5 by an optical fiber 6 and supplies the laser beam to the optical head 5 through the optical fiber 6. The controller 8 controls the rotational moving device, the laser oscillator 7, and the like. In an area where the outer circumferential surface of the pipe 2 is irradiated with the laser beam, a temperature sensor 9 measuring the temperature on the outer surface of the pipe 2, such as a thermocouple, is installed. The controller 8 acquires the temperature measured by the temperature sensor 9 and controls rotational speed and rotational angular position of the rotary moving device, output power of the laser oscillator 7, and the like.

The optical head 5, optical fiber 6, and laser oscillator 7 constitute laser beam irradiating means and form a heating optical system serving as a linear heat source of a laser beam. In the laser beam irradiating means, an irradiated area can be moved in the axial direction of the pipe 2 by moving, in the axial direction L, the position of the optical head 5 along the support section 4. By rotating the optical head 5 together with the support section 4 in a circumferential direction R of the pipe 2, the laser beam from the optical head 5 is rotated and irradiated around the outer circumferential surface of the welded part of the pipe 2 so that a predetermined area of the outer surface of the pipe 2 is equally heated in the circumferential direction. In the optical head 5, the position of the optical head 5 itself or positions of a lens, a mirror, and the like constituting the optical head 5 are shifted to adjust circumferential and axial irradiation widths for adjusting the heated area. Depending on the size of the irradiated area, a plurality of optical heads may be provided for the support section 4.

The support section 4 and rotary moving device constitute rotary moving means. The specific constitution of the rotary moving means may be any constitution which allows, for example, the support section 4 to be rotated with its inner circumferential surface holding the pipe 2 and its outer circumferential surface supporting the support section 4.

To improve residual stress, in the residual stress improving system 1 according to the present invention, the optical head 5 is adjusted for adjusting the heated area in advance. The rotary moving device is rotated while the controller 8 controls the output power of the laser oscillator 7 and moving speed of the rotary moving device at a predetermined moving speed. The laser beam emitted from the optical head 5 is thus rotated along the outer circumference of the pipe 2 while being irradiated onto a predetermined area of the outer circumferential surface of the pipe 2. The predetermined area of the outer circumferential surface of the pipe 2 is thus heated. At this time, using with the difference in temperature between the inner and outer surfaces of the pipe 2 which is produced during heating, the inner surface is caused to tensile yield, thus reducing the residual stress or improving the residual stress into compressive stress in the inner surface after cooling. Preferably, the heated temperature is less than the solid solution temperature. In the case of the present invention, the inner surface of the pipe 2 does not need to be forcibly cooled.

With reference to FIG. 1(b), a description is given of the principle of the aforementioned residual stress improving method. When laser irradiation is performed for the outer surface of a predetermined area of a tube body whose residual stress is desired to be improved, heating by laser irradiation forms a temperature distribution having a predetermined difference in temperature between outer and inner surfaces of the tube body (between line A-A in FIG. 1(a)) (see (1)). At this time, the outer surface is in a compressive stress state while the inner surface is in a tensile stress state. Furthermore, the surface of the outer surface part is in a compressive yield state with a stress exceeding compressive yield stress of a material constituting the object pipe, and the surface of the inner surface is in a tensile yield state with a stress exceeding tensile yield stress of the material constituting the object pipe (see (2)).

When the inner and outer surfaces of the predetermined area are cooled after heating, the temperature between the outer and inner surfaces becomes constant (see (3)). At this time, the outer surface is in a tensile stress state, and the inner surface is in a compressive stress state, thus allowing an improvement in residual stress of the inner surface from tensile stress to compressive stress (see (4)). In such a manner, by producing stress (strain) equal to or more than yield stress through heating by laser irradiation, the residual stress produced in the inner surface of the tube body is improved from the tensile state to the compressive state, thus preventing stress corrosion cracking in the inner surface of the tube body. Accordingly, in the case of heating the outer circumferential surface of the pipe 2 using the residual stress improving system 1 according to the present invention, it is only necessary to set laser irradiation conditions so that stress generated during heating produces strain not less than that corresponding to the yield stress.

However, the laser irradiation cannot take any form even if the laser irradiation satisfies the aforementioned conditions. When the pipe 2 is excessively heated, there is an area exposed to the sensitization temperature around the heated area, which adversely affects the material itself. In the case of welding pipes to each other, especially when the outer surface of the welded part is irradiated with laser irradiation in a linear form by rotation of the laser beam in the circumferential direction, areas heated by the laser irradiation overlap each other at the start and end angles of the laser irradiation to excessively heat the pipes, and the pipes are therefore exposed to the sensitization temperature. The material of the pipe itself could be therefore adversely affected.

In the present invention, therefore, the intensity of laser irradiation (the output power of the laser oscillator 7) is controlled at the start and end angles of laser irradiation to prevent overheating of the heated areas at the start and end angles of laser irradiation so that the heated temperature of the outer surface of the pipe 2 is uniform in the circumferential direction.

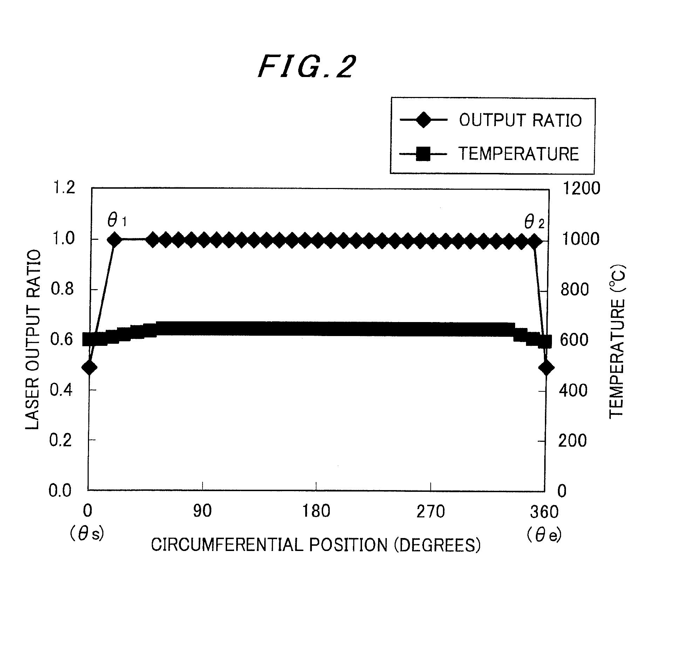

Specifically, as shown in FIG. 2, when start and end angles θₛ and θₑ of laser irradiation to a tube body are set to 0° and 360° as circumferential positions, respectively, in other words, when the start angle θₛ = the end angle θₑ, the intensity of the laser beam is gradually increased from an intensity ratio of 0.5 to an intensity ratio of 1.0, which corresponds to the steady intensity, during rotation from the start angle θₛ=0° to a first predetermined angle θ₁ (an output increasing step) . Next, during rotation from the first predetermined angle θ₁ to a second predetermined angle θ₂ which is short of the end angle θₑ, the intensity of the laser beam keeps an intensity ratio of 1.0 (a steady output step). Next, during rotation from a second predetermined angle θ₂ to the end angle θₑ, the intensity of the laser beam is gradually decreased from an intensity ratio of 1.0 to an intensity ratio of 0.5 (an intensity degreasing step). The intensity of the laser beam is caused to reach 0 at the end angle θₑ = 360° (an output stop step). A cycle of all the above steps is performed at one turn of rotation for laser irradiation to the tube body 2.

In this embodiment, the intensity ratios at the start and end angles θₛ and θₑ are set to 0.5. However, if the tube body is not excessively heated, or if the intensity is smaller than the steady intensity, the intensity ratios may be set as follows, for example. The intensity ratios at the start and end angles θₛ and θₑ are set to 0; and the intensity of the laser beam is increased from an intensity ratio of 0 to 1. 0 and then decreased from an intensity ratio of 1.0 to 0.

In the present invention, this embodiment and other later-described embodiments are described with the steady intensity being defined as an intensity of a laser beam which increases the temperature of the outer surface of the pipe 2 to a predetermined temperature (for example, about 600°C) at a predetermined constant rotational speed. Changes in intensity of a laser beam are shown with the steady intensity being set to an intensity ratio of 1.0. For example, in FIG. 2, the intensity of irradiation during rotation from the first to second predetermined angles θ₁ to θ₂ has an intensity ratio of 1.0 as the steady intensity. As for the intensity of the laser beam at the other angular range, the intensity ratio is shown on a basis of the intensity ratio of the steady intensity, which is 1.0.

As described above, in the vicinity of the start and end angles θₛ and θₑ of laser irradiation, the intensity of the laser beam is gradually increased and then gradually decreased. The temperature at the start and end angles θₛ and θₑ can be therefore substantially equal to the temperature of an area irradiated with laser irradiation with the steady intensity, and the heated temperature of the pipe 2 can be substantially uniform around the entire circumference, as shown in FIG. 2. It is therefore possible to prevent occurrence of an overheated area as shown in FIG. 12 even if there is an area irradiated with the laser beam more than once in the vicinity of the start and end angles θₛ and θₑ of laser irradiation and to improve residual stress without adversely affecting the material itself.

The first and second predetermined angles θₛ and θₑ and changes in intensity of the laser beam are properly set depending on the shape, size, and material of the pipe 2, rotational speed of laser irradiation, and the like.

### EMBODIMENT 2

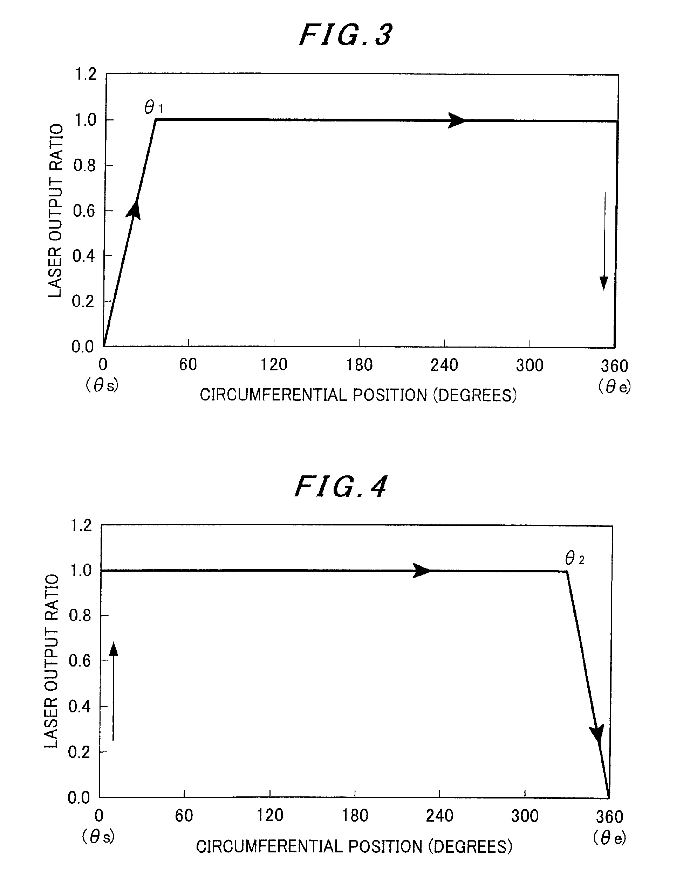

FIG. 3 is a view explaining another example of the embodiment of the tube body stress improving method according to the present invention.
This embodiment is described based on the residual stress improving system 1 shown in Embodiment 1. Description of the constitution of the residual stress improving system 1 itself is therefore omitted. Embodiments 3 to 5 shown below are described based on the residual stress improving system 1 shown in Embodiment 1, as well, and therefore description of the constitution of the residual stress improving system 1 itself is omitted.

As shown in FIG. 3, in this embodiment, when the start and end angles θₛ and θₑ of laser irradiation to a tube body are 0° and 360° as circumferential positions, respectively, in other words, when the start angle θₛ = the end angle θₑ, the intensity of the laser beam is gradually increased from an intensity ratio of 0 to an intensity ratio of 1.0 as the steady intensity during rotation from the start angle θₛ to the first predetermined angle θ₁ (an output increasing step). Next, during rotation from the first predetermined angle θ₁ to the end angle θₑ, the intensity of the laser beam keeps an intensity ratio of 1.0 (a steady output step). At the end angle θₑ=360°, the intensity of the laser beam is caused to reach 0 (an output stop step). A cycle of all the above steps is performed at one turn of rotation for laser irradiation to the tube body 2.

In this embodiment, the intensity ratio is 0 at the start angle θₛ. However, if the tube body is not excessively heated, or if the intensity is smaller than the steady intensity, the start angle θₛ may be set, for example, at an intensity ratio of 0.5, and the intensity of the laser beam may be increased from the intensity ratio of 0.5 to 1.0 as in the case shown in Embodiment 1.

As described above, the intensity of the laser beam is gradually increased in the vicinity of the start angle θₛ of laser irradiation and then decreased to reach 0 at the end angle θₑ. The temperature near the start and end angles θₛ and θₑ can be therefore substantially equal to that of an area irradiated with laser irradiation with the steady intensity, and the heated temperature of the pipe 2 can be thus substantially uniform around the entire circumference. Accordingly, even if there is an area irradiated with the laser beam more than once in the vicinity of the start and end angles θₛ and θₑ of laser irradiation, it is possible to prevent occurrence of an overheated area and to improve the residual stress without adversely affecting the material itself.

### EMBODIMENT 3

FIG. 4 is a view explaining still another example of the embodiment of the tube body stress improving method according to the present invention.

As shown in FIG. 4, in this embodiment, when the start and end angles θₛ and θₑ of laser irradiation to a tube body are 0° and 360° as circumferential positions, respectively, in other words, when the start angle θₛ = the end angle θₑ, the intensity of the laser beam is set to an intensity ratio of 1.0 as the steady intensity and keeps an intensity ratio of 1.0 during rotation from the start angle θₛ to the second predetermined angle θ₂, which is short of the end angle θₑ (an steady output step). Next, during rotation from the second predetermined angle θ₂ to the end angle θₑ, the intensity of the laser beam is gradually decreased from an intensity ratio of 1.0 to 0 (an output decreasing step) and caused to reach 0 at the end angle θₑ=360° (an output stop step). A cycle of all the above steps is performed at one turn of rotation for laser irradiation to the tube body 2.

In this embodiment, the intensity ratio is 0 at the end angle θₑ. However, if the tube body is not excessively heated, or if the intensity is smaller than the steady intensity, the intensity of the laser beam may be decreased, for example, from an intensity ratio of 1.0 to reach 0.5 at the end angle θₑ and then decreased to 0, as the case shown in Embodiment 1.

As described above, the intensity of the laser beam is gradually decreased in the vicinity of the end angle θₑ of laser irradiation, so that the temperature around the start and end angles θₛ any θₑ can be substantially equal to that of an area irradiated with laser irradiation with the steady intensity. The heated temperature of the pipe 2 can be thus substantially uniform around the entire circumference. Accordingly, even if there is an area irradiated with the laser beam more than once in the vicinity of the start and end angles θₛ and θₑ of laser irradiation, it is possible to prevent formation of an overheated area and to improve the residual stress without adversely affecting the material itself.

### EMBODIMENT 4

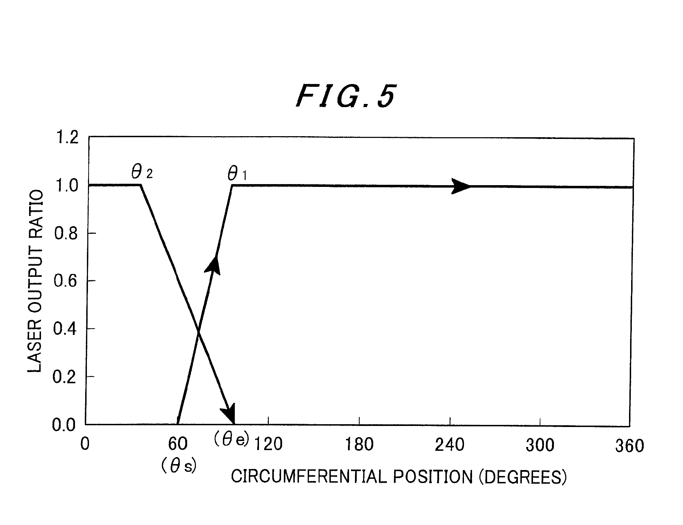

FIG. 5 is a view explaining still another example of the embodiment of the tube body stress improving method according to the present invention.

As shown in FIG. 5, in this embodiment, the start angle θₛ of laser irradiation to a tube body is 60° as a circumferential position, and the end angle θₑ is 100° as a circumferential position which is beyond the start angle θₛ after one turn of rotation. Compared to the Embodiments 1 to 3 in which the start and end angles θₛ and θₑ are equal to each other, the start and end angles θₛ and θₑ are different from each other in this embodiment. In this case, the intensity of the laser beam is gradually increased from an intensity ratio of 0 to 1.0 as the steady intensity during rotation from the start angle θₛ = 60° to the first predetermined angle θ₁ (an output increasing step) . Next, the intensity of the laser beam keeps an intensity ratio of 1.0 during rotation from the first predetermined angle θ₁ to the second predetermined angle θ₂ which is short of the start angle θₛ (a steady output step). Next, during rotation from the second predetermined angle θ₂ to the end angle θₑ through the start angle the θₛ, the intensity of the laser beam is gradually decreased from an intensity ratio of 1.0 to 0 (an output decreasing step).

By the aforementioned output increasing step -> the steady output step -> the output decreasing step, the angular range of the output increasing step (from the start angle θₛ to first predetermined angle θ₁) and the angular range of the output decreasing step (from the second predetermined angle θ₂ to the end angle θₑ) partially overlap each other. Unlike Embodiments 1 to 3, there is a range irradiated with laser irradiation more than once during rotation from the start angle θₛ to the end angle θₑ. These all steps (a cycle of steps) are performed in more than one and less than two turns of rotation for laser irradiation to the tube body 2. In the angular range irradiated with laser irradiation more than once (between the start and end angles θₛ and θₑ), the intensity of the laser beam is controlled so that the sum of intensity values of the laser beam in the intensity increasing step and that in the intensity decreasing step has an intensity ratio of 0.8 to 0.9 with respect to an intensity ratio of 1.0 as the steady intensity. This is performed in order that the heated temperature by limited intensity (between the start and end angles θₛ and θₑ) is not excessively higher or lower than the heated temperature by the steady intensity (from the first predetermined angle θ₁ to the second predetermined angle θ₂).

As described above, by providing the angular range irradiated with laser irradiation more than once and by properly limiting laser irradiation intensity in that angular range, the temperature in such an angular range is set substantially equal to the temperature of the area irradiated with laser irradiation with the steady intensity. The heated temperature of the pipe 2 can be therefore substantially uniform around the entire circumference. Accordingly, it is possible to prevent formation of an overheated area in the vicinity of the start and end angles θₛ and θₑ of laser irradiation and to improve the residual stress without adversely affecting the material itself. Moreover, by providing the range irradiated with laser irradiation more than once in the vicinity of the start and end angles θₛ and θₑ of laser irradiation, the pipe 2 can be heated to have the uniform maximum temperature around the entire circumference, and therefore the residual stress is equally improved around the entire circumference.

### EMBODIMENT 5

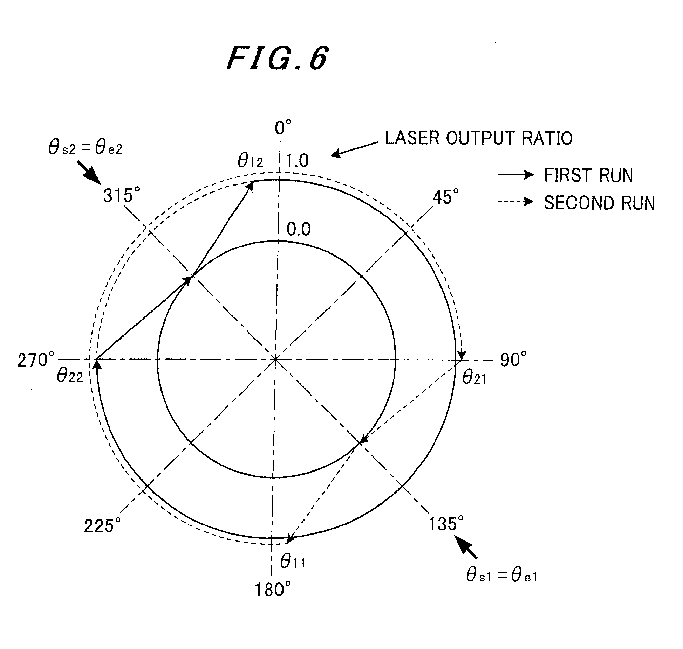

FIG. 6 is a view explaining still another example of the embodiment of the tube body stress improving method according to the present invention, showing changes in intensity of the laser beam along circumferential movement in a radar chart.

In the above Embodiments 1 to 4, the residual stress of the pipe 2 is improved by laser irradiation of one or less than two turns. However, unless the pipe is excessively heated, the number of turns is not necessarily limited to one, and the residual stress of the pipe 2 may be improved by laser irradiation of a plurality of turns (not less than two). Herein, a description is given of a specific example to which the residual stress improving method shown in Embodiment 1 is applied. However the residual stress improving methods shown in Embodiments 2 to 4 can be also applied.

As shown in FIG. 6, in this embodiment, the plurality of cycles is two runs (= two turns of rotation), and the start and end angles are shifted by 180° at each turn.

Specifically, in a first run, start and end angles θₛ₁ and θₑ₁ of laser irradiation are equally set to 135°. First, the intensity of the laser beam is gradually increased from an intensity ratio of 0 to 1.0 as the steady intensity during rotation from the start angle θₛ₁ = 135° to a first predetermined angle θ₁₁ (an output increasing step). Next, during rotation from the first predetermined angle θ₁₁ to a second predetermined angle θ₂₁, which is short of the end angle θₑ₁, the intensity of the laser beam keeps an intensity ratio of 1.0 (a steady output step). Next, the intensity of the laser beam is gradually decreased from an intensity ratio of 1.0 to 0 during rotation from the second predetermined angle θ₂₁ to the end angle θₑ₁ (an output decreasing step) and is caused to reach 0 at the end angle θₑ₂ = 135° (an output stop step).

In a second run after the heated pipe 2 is cooled down to ambient temperature, start and end angles θₛ₂ and θₑ₂ of laser irradiation are equally set to 315°, which are 180° apart from the start and end angles θₛ₁ and θₑ₁ of the first run, respectively. First, the intensity of the laser beam is gradually increased from an intensity ratio of 0 to 1.0 as the steady intensity during rotation from the start angle θₛ₂ = 315° to a first predetermined angle θ₁₂ (an output increasing step). Next, during rotation from the first predetermined angle θ₁₂ to a second predetermined angle θ₂₂, which is short of an end angle θₑ₂, the intensity of the laser beam keeps an intensity ratio of 1.0 (a steady output step). Next, the intensity of the laser beam is gradually decreased from an intensity ratio of 1.0 to 0 during rotation from the second predetermined angle θ₂₂ to the end angle θₑ₂ (an output decreasing step) and is caused to reach 0 at the end angle θₑ₂ = 315° (an output stop step).

In other words, a cycle of the output increasing step -> the steady output step -> the output degreasing step -> the output stop step is performed twice (two turns of rotation), and the heated tube body 2 is cooled down to ambient temperature after each cycle. Furthermore, the start and end angles are shifted for each cycle.

FIG. 6 shows the intensities of the laser beam at the first and second turns (first and second runs) with a small shift therebetween so as to clarify changes in intensity of the laser beam, but both of the intensity of the laser beam during rotation from the first predetermined angle θ₁₁ to the second predetermined angle θ₂₁ in the first run and the intensity of the laser beam during rotation from the first predetermined angle θ₁₂ to the second predetermined angle θ₂₂ in the second run have intensity ratios of 1.0.

As described above, by gradually increasing and decreasing the intensity of laser beam in the vicinities of the start and end angles θₛ and θₑ of laser irradiation of each turn, the temperature at the start and end angles θₛ and θₑ can be substantially equal to the temperature of an area irradiated with laser irradiation with steady intensity. The heated temperature of the pipe 2 can be thus substantially uniform around the entire circumference. It is therefore possible to prevent formation of an overheated area in the vicinity of the start and end angles θₛ and θₑ of laser irradiation and to improve the residual stress without adversely affecting the material itself.

Furthermore, in the above Embodiments 1 to 4 or in the only first run of this embodiment, it is sometimes difficult to achieve the uniform maximum heated temperature around the entire circumference of the pipe 2 depending on the conditions of laser irradiation and the state of the pipe 2 as a laser irradiation object. However, in this embodiment, by shifting the start and end angles of the first run and those of the second run by 180° each other, the area in the vicinity of the start and end angles of the first run is irradiated with laser irradiation with steady intensity at the second run. It is therefore possible to achieve the uniform maximum temperature in the temperature history around the entire circumference of the pipe 2 and to uniformly improve the residual stress around the circumference of the pipe 2. Moreover, the temperature of the pipe 2 is cooled down to ambient temperature after the first run, and then the second run is performed. This prevents formation of an overheated area and can therefore improve the residual stress without adversely affecting the material itself.

The number of turns of laser irradiation is not limited two and may be, for example, a plural number such as three or four. For example, in the case of three turns, the start and end angles are shifted by 120° at each of the first to third runs. In the case of four turns, the start and end angles are shifted by 90° at each of first to fourth runs. These cases can provide an effect similar to the above, and the pipe 2 can be heated to have the uniform maximum temperature around the entire circumference of the pipe 2 and uniformly improves residual stress around the entire circumference of the pipe 2. Moreover, the pipe 2 is cooled down to ambient temperature after each turn, and then the next turn is performed. This prevents formation of an overheated area and improves the residual stress without adversely affecting the material itself.

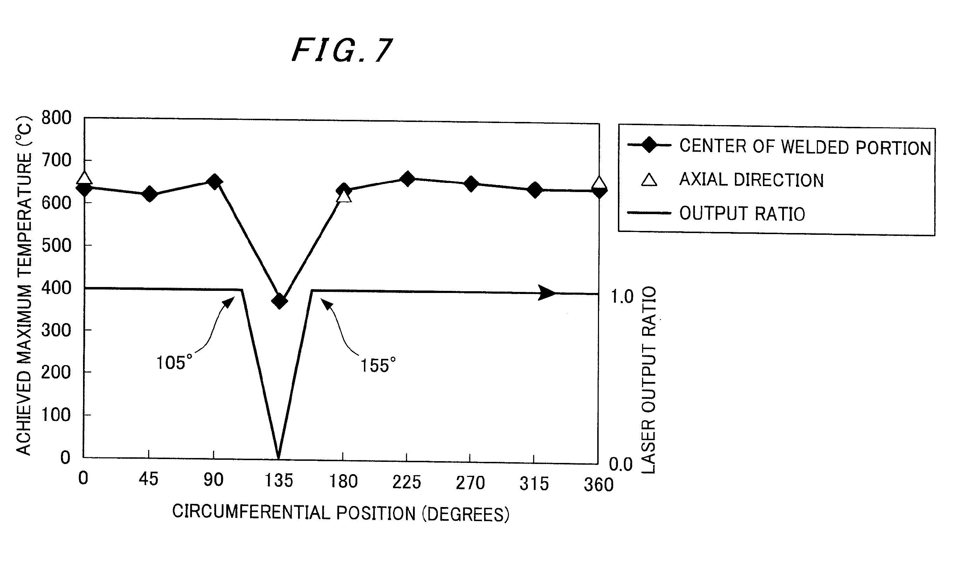

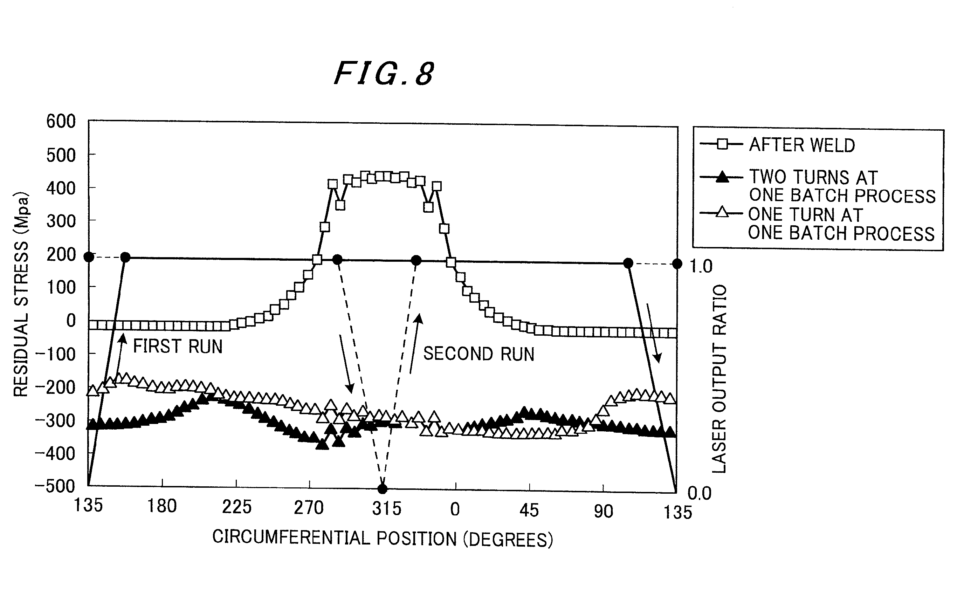

To confirm the effect of this embodiment, FIG. 7 shows graphs of changes in intensity ratio at the first run and the maximum temperature at the center of the outer surface of the welded portion of the pipe 2. In addition, FIG. 8 shows graphs of changes in intensity ratio at the first and second runs and changes in a circumferential distribution of residual stress at the center of the inner surface of the welded portion of the pipe 2 between before and after heating. FIG. 7 also shows the maximum temperature of the pipe 2 in the axial direction at positions of 0° and 180°. Moreover, in this embodiment, the inner surface is subjected to adjustment welding, and large residual stress (tensile stress) is accordingly produced in the vicinity of 315° in FIG. 8 before laser irradiation. The start and end angles of the second run are equally set at a portion having the large tensile stress, and the effect of this embodiment is thereby confirmed. Furthermore, FIG. 8 also shows residual stress after the conventional method is used (one turn at one batch process with constant intensity of laser irradiation) for comparison. In this embodiment, the pipe 2 as a target of laser irradiation has a joint where different materials, low alloy steel and stainless steel (SUS316), are connected by welding nickel-chrome-iron alloy. The pipe 2 has a shape of a wall thickness of 22 mm and an outer diameter of 149 mm. The laser beam is irradiated in a range of about 100 mm (in the circumferential direction) by about 150 mm (in the axial direction) at a moving speed of 6 mm/s.

As shown in FIG. 7, by changing the intensity of the laser beam during circumferential movement, the maximum temperature in the outer surface of the pipe 2 in the vicinity of the 135° as the start and end angles of the first run is lower than the maximum temperature by laser irradiation with the steady intensity, and overheating does not occur at least. It is shown that overheating can be reliably prevented and also shown that the maximum temperature by laser irradiation with the steady intensity is uniform in both the axial and circumferential directions.

Such laser irradiation with the start and end angles shifted by 180° at the second run allows heating to the uniform maximum temperature around the entire circumference. In other words, even if there is an area which maximum temperature is low in the first run, laser irradiation of the second run can increase the maximum temperature of such an area to a temperature equal to the maximum temperature by laser irradiation with the steady intensity. As shown in FIG. 8, it is confirmed that residual stress which is tensile stress after welding (before heating by laser irradiation) is changed to compressive stress around the entire circumference by heating by laser irradiation of this embodiment, and thereby the residual stress is improved. Compared with the residual stress after heating of conventional laser irradiation of one turn with constant intensity, this result has a substantially equivalent result, or has a better result than that of the conventional one at the start and end angles (in the vicinity of 135°).

In this embodiment, the intensity of the laser beam is set to 0 at the start angle θₛ₁ = the end angle θₑ₁ and at the start angle θₛ₂ = the end angle θₑ₂. However, with reference to measurement results of the maximum temperature of FIG. 7, it is more desirable that the maximum temperature by the limited intensity (from 105° to 155°) is not excessively lower than that at the steady intensity (from 155° to 105°) . Accordingly, as is similar to Embodiment 1, the intensity at this time may be half of the steady intensity.

Moreover, in this embodiment, even when predetermined laser irradiation is not completed because of any trouble during the laser irradiation, the residual stress can be improved without any problem by checking the history of irradiation (for example, the start and end angles and intensity of the laser beam) and performing the aforementioned laser irradiation at the next turn starting from an angle different from the start and end angles of the laser irradiation of the previous turn.

### EMBODIMENT 6

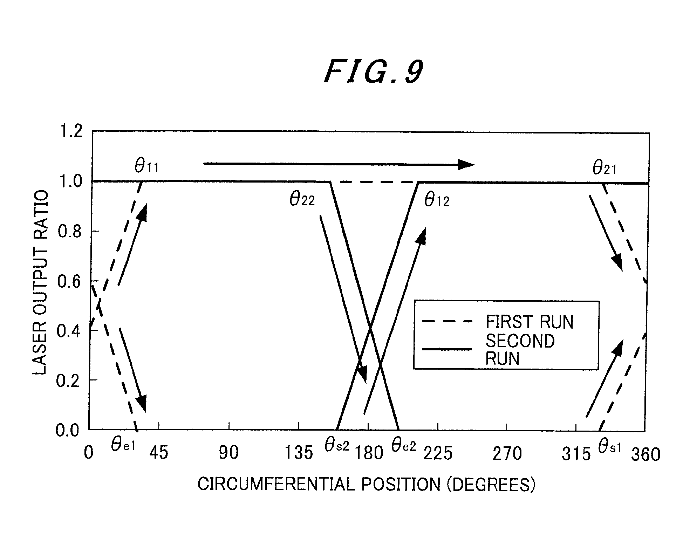

FIG. 9 is a view explaining still another example of the embodiment of the tube-body residual stress improving method according to the present invention. This embodiment is a method obtained by applying the residual stress improving method shown in Embodiment 4 to the above Embodiment 5.

In this embodiment, as shown in FIG. 9, the residual stress of the pipe 2 is improved as follows. The plurality of cycles is two runs (not less than two turns of rotation). Ranges irradiated with laser irradiation more than once are provided in the vicinity of the start and end angles by shifting the start and end angles of laser irradiation by 180° at each run and setting the start and end angles of laser irradiation of each run to be different from each other.

Specifically, at the first run, a start angle θₛ₁ of laser irradiation is 340°, and an end angle θₑ₁ thereof is 20° which is beyond the start angle θₛ₁ after one turn of rotation. First, the intensity of the laser beam is gradually increased from an intensity ratio of 0 to an intensity ratio of 1.0 as the steady intensity during rotation from the start angle θₛ₁ to a first predetermined angle θ₁₁ (an output increasing step) . Next, the intensity of the laser beam keeps the intensity ratio 1.0 during rotation from the first predetermined angle θ₁₁ to a second predetermined angle θ₂₁, which is short of the start angle θₛ₁ (a steady output step). Next, the intensity of the laser beam is gradually decreased from an intensity ratio of 1.0 to 0 during rotation from the second predetermined angle θ₂₁ to the end angle θₑ₁ (an output decreasing step) and is caused to reach an intensity ratio of 0 at the end angle θₑ₂ = 20° (an output stop step) . Herein, in laser irradiation to the pipe 2, by the output increasing step -> the steady output step -> the output decreasing step -> the output stop step, the angular range of the output increasing step (the start angle θₑ₂ to the first predetermined angle θ₁₁) and the angular range of the output decreasing step (the second predetermined angle θ₂₁ to the end angle θₑ₁) partially overlap each other.

At the second run after the heated pipe 2 is cooled down to ambient temperature, a start angle θₛ₂ of the laser irradiation is set to 160°, and an end angle θₑ₂ is set to 200°, which is beyond the start angle θₛ₂ after one turn of rotation. In other words, the start and end angles θₛ₂ and θₑ₂ are 180° shifted from the start and end angles θₛ₁ and θₑ₁, respectively. First, the intensity of the laser beam is gradually increased from an intensity ratio of 0 to an intensity ratio of 1.0 as the steady intensity during rotation from the start angle θₛ₂ = 160° to the first predetermined angle θ₁₂ (an output increasing step). Next, the intensity of the laser beam keeps the intensity ratio 1.0 during rotation from the first predetermined angle θ₁₂ to a second predetermined angle θ₂₂, which is short of the start angle θₛ₂ (a steady output step) . Next, the intensity of the laser beam is gradually decreased from an intensity ratio of 1.0 to 0 during rotation from the second predetermined angle θ₂₂ to the end angle θₑ₂ (an output decreasing step) and is caused to reach an intensity ratio of 0 at the end angle θₑ₂ = 200° (an output stop step). In this laser irradiation to the pipe 2, as well, by the output increasing step -> the steady output step -> the output decreasing step -> the output stop step, the angular range of the output increasing step (the start angle θₛ₂ to the first predetermined angle θ₁₂) and the angular range of output decreasing step (the second predetermined angle θ₂₂ to the end angle θₑ₂) partially overlap each other.

In other words, a cycle composed of the output increasing step -> the steady output step -> the output decreasing step -> the output stop step is performed twice (not less than two turns of rotation), and the heated pipe 2 is cooled down to ambient temperature after each cycle. Furthermore, the start and end angles are shifted at each cycle, and in addition, ranges irradiated with laser irradiation more than once are provided in the vicinity of the start and end angles θₛ₁ and θₑ₁ of laser irradiation of the first run (between the start angle θₛ₁ and the end angle θₑ₁) and in the vicinity of the start and end angles θₛ₂ and θₑ₂ of laser irradiation of the second run (between the start angle θₛ₂ and the end angle θₑ₂).

In the angular range irradiated with laser irradiation more than once (from the start angle θₛ₂ to the first predetermined angle θ₁₂, from the second predetermined angle θ₂₂ to the end angle θₑ₂), the intensity of the laser beam is controlled so that the sum of intensity values of the laser beam in the intensity increasing step and the intensity decreasing step has an intensity ratio of 0.8 to 0.9 with respect to an intensity ratio of 1. 0 as the steady intensity. This is carried out so that the heated temperature with the limited intensity (between the start angle θₛ₂ and the first predetermined angle θ₁₂, between the second predetermined angle θ₂₂ and the end angle θₑ₂) is not excessively higher or lower than that with the steady intensity (between the first predetermined angle θ₁₁ and the second predetermined angle θ₂₁, between the first predetermined angle θ₁₂ and the second predetermined angle θ₂₂).

As described above, by providing the angular ranges irradiated with laser irradiation more than once and by limiting the intensity of the laser irradiation in such angular ranges, the temperature in those angular ranges can be substantially equal to or not more than the temperature of an area irradiated with laser irradiation with the steady intensity. It is therefore possible to prevent formation of an overheated area in the vicinity of the start angles (θₛ₁, θₛ₂) and end angles (θₑ₁, θₑ₂) of laser irradiation and therefore to improve the residual stress without adversely affecting the material itself. Moreover, by providing the angular ranges irradiated with laser irradiation more than once and by properly limiting the intensity of the laser irradiation in the vicinity of the start angles (θₛ₁, θₛ₂) and end angles (θₑ₁, θₑ₂) of laser irradiation, the pipe 2 can be heated to the uniform maximum temperature around the entire circumference. It is therefore possible to provide an equal improvement in residual stress around the circumference of the pipe 2.

In this embodiment, the start and end angles of the first and second runs are set 180° apart from each other. The area in the vicinity of the start and end angles of the first run is irradiated with laser irradiation with the steady intensity at the second run. Accordingly, the maximum temperature can be uniform around the entire circumference of the pipe 2 in the temperature history, thus making it possible to provide an equal improvement in residual stress around the entire circumference of the pipe 2. Moreover, the temperature of the pipe 2 is cooled down to room temperature in the first run, and then the second run is performed. This can prevent formation of an overheated area, thus improving residual stress without adversely affecting the material itself.

In this embodiment, as in the case of Embodiment 5, the number of cycles of laser irradiation is not necessarily limited to two and may be a plural number such as three or four, for example. Such cases can also provide the same effect as described above.

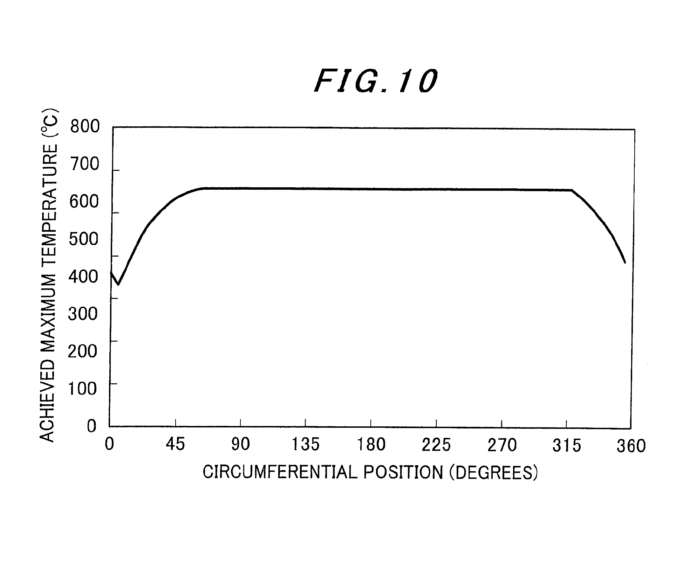

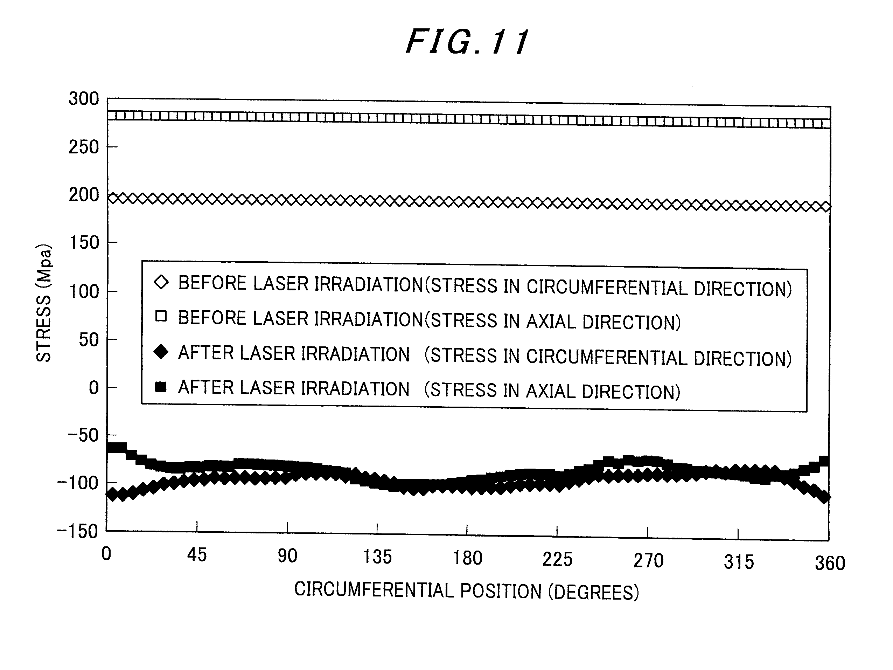

To confirm the effect of this embodiment, FIG. 10 shows graphs of the maximum temperature at the center of the outer surface of the welded portion of the pipe 2 during the first run, and FIG. 11 shows changes in residual stress distribution at the center of the inner surface of the welded portion of the pipe 2 between before and after heating. In this embodiment, the pipe 2 as a target of laser irradiation is composed of butt-welded steel pipes of stainless (SUS316) with a wall thickness of 13.5 mm and an outer diameter of 114.3 mm. The laser beam is irradiated in a range of about 80 mm (in the circumferential direction) by about 100 mm (in the axial direction) at a moving speed of 27 mm/s.

As shown in FIG. 10, the intensity of the laser beam is changed along with the circumferential movement. In the vicinity of the start and end angles of the first run, the maximum temperature in the outer surface of pipe 2 is lower than the maximum temperature by laser irradiation with the steady intensity, but overheating does not occur at least. It is shown that overheating can be reliably prevented. The maximum temperature of laser irradiation with the steady intensity is uniform in the circumferential direction and is 550°C as intended.

Such laser irradiation with the start and end angles shifted by 180° at the second run allows heating to the uniform maximum temperature around the entire circumference. Specifically, even if there is an area which maximum temperature is low in the first run, laser irradiation of the second run can increase the maximum temperature of the area to a temperature equal to the maximum temperature by laser irradiation with the steady intensity. As shown in FIG. 11, residual stress at the center of the inner surface of the welded portion after welding (before heating by laser irradiation) includes 200 MPa tensile stress in the circumferential direction and 280 MPa tensile stress in the axial direction, and both the circumferential and axial stresses at the center of the inner surface of the welded portion became compressive stress around the entire circumference by heating of laser irradiation of this embodiment, thus achieving an improvement in residual stress.

### Embodiment 7

This embodiment is an application of the residual stress improving method shown in Embodiment 4 based on the residual stress improving system 1 shown in Embodiment 1. This embodiment is described with reference to FIG. 1(a) and FIG. 6, and redundant description thereof is omitted.

In this embodiment, the temperature sensor 9 shown in FIG. 1 (a) is attached to each proper circumferential position on the outer surface of the pipe 2 depending on changes in intensity of the laser irradiation so that the temperature of the pipe 2, especially the maximum temperature thereof, can be surely measured during a plurality of cycles of laser irradiation even with a small number of measurement points of temperature.

Specifically, as shown in FIG. 6, in the case where the start and end angles of the first run are 135° and the start and end angles of the second run are 315°, that is, in the case where the start and end angles are shifted by 180° at each cycle, the temperature sensors 9 are attached at four points circumferentially at intervals of 90°, for example, 0°, 90°, 180°, and 270° in FIG. 6, respectively. Each of these positions is an angular position at an edge of the angular range of the pipe 2 irradiated with laser irradiation with steady intensity (the steady output step) in each of the first and second runs, and each of the temperature sensors 9 measures the temperature at a position where overheating is more likely to occur. Accordingly, even such temperature measurement at four points can ensure measurement and monitoring of the maximum temperature around the entire circumference.

### Industrial Availability

The tube-body residual stress improving method and system according to the present invention are suitable for improving stress remaining after welding of large pipes and the like in, for example, nuclear power plants, large plants and the like.

## Claims

1. A tube-body residual stress improving method of locally irradiating an outer surface of a welded part with a laser beam while rotating an area irradiated with the laser beam at a predetermined rotational speed around an outer circumference of the tube body in order to heat the entire circumference of the welded part for an improvement of residual stress around the entire circumference of the welded part, the tube-body residual stress improving method comprising:
an output increasing step of gradually increasing an intensity of the laser beam to a steady intensity from any one of 0 and an intensity smaller than the steady intensity during rotation from an irradiation start angle to a first predetermined angle on the tube body, the steady intensity allowing a desired heated temperature to be achieved at the predetermined rotational speed;
a steady output step of keeping the intensity of the laser beam at the steady intensity during rotation from the first predetermined angle to a second predetermined angle short of an irradiation end angle which is the same as the irradiation start angle;
an output decreasing step of gradually decreasing the intensity of the laser beam from the steady intensity to any one of 0 and an intensity smaller than the steady intensity during rotation from the second predetermined angle to the irradiation end angle; and
an output stop step of causing the intensity of the laser beam to reach 0 at the irradiation end angle, wherein
all of the steps are performed at one turn of rotation.

2. A tube-body residual stress improving method of locally irradiating an outer surface of a welded part with a laser beam while rotating an area irradiated with the laser beam at a predetermined rotational speed around an outer circumference of the tube body in order to heat the entire circumference of the welded part for an improvement of residual stress around the entire circumference of the welded part, the tube-body residual stress improving method comprising:
an output increasing step of gradually increasing an intensity of the laser beam to a steady intensity from any one of 0 and an intensity smaller than the steady intensity during rotation from an irradiation start angle to a first predetermined angle on the tube body, the steady intensity allowing a desired heated temperature to be achieved at the predetermined rotational speed;
a steady output step of keeping the intensity of the laser beam at the steady intensity during rotation from the first predetermined angle to an irradiation end angle which is the same as the irradiation start angle; and
an output stop step of causing the intensity of the laser beam to reach 0 at the irradiation end angle, wherein
all of the steps are performed at one turn of rotation.

3. A tube-body residual stress improving method of locally irradiating an outer surface of a welded part with a laser beam while rotating an area irradiated with the laser beam at a predetermined rotational speed around an outer circumference of the tube body in order to heat the entire circumference of the welded part for an improvement of residual stress around the entire circumference of the welded part, the tube-body residual stress improving method comprising:
a steady output step of setting an intensity of the laser beam to a steady intensity at an irradiation start angle on the tube body and keeping the intensity of the laser beam at the steady intensity during rotation from the irradiation start angle to a second predetermined angle short of an irradiation end angle which is the same as the irradiation start angle, the steady intensity allowing a desired heated temperature to be achieved at the predetermined rotational speed;
an output decreasing step of gradually decreasing the intensity of the laser beam from the steady intensity to any one of 0 and an intensity smaller than the steady intensity during rotation from the second predetermined angle to the irradiation end angle; and
an output stop step of causing the intensity of the laser beam to reach 0 at the irradiation end angle, wherein
all of the steps are performed at one turn of rotation.

4. A tube-body residual stress improving method of locally irradiating an outer surface of a welded part with a laser beam while rotating an area irradiated with the laser beam at a predetermined rotational speed around an outer circumference of the tube body in order to heat the entire circumference of the welded part for an improvement of residual stress around the entire circumference of the welded part, the tube-body residual stress improving method comprising:
an output increasing step of gradually increasing an intensity of the laser beam from 0 to a steady intensity during rotation from an irradiation start angle to a first predetermined angle on the tube body, the steady intensity allowing a desired heated temperature to be achieved at the predetermined rotational speed;
a steady output step of keeping the intensity of the laser beam at the steady intensity during rotation from the first predetermined angle to a second predetermined angle which is short of the start angle; and
an output decreasing step of gradually decreasing the intensity of the laser beam from the steady intensity to 0 during rotation from the second predetermined angle to an irradiation end angle which is beyond the start angle, wherein
all of the steps are performed at more than one and less than two turns, while angular ranges, of the tube body, respectively of the output increasing step and the output decreasing step partially overlap each other, and also a sum of the intensities of the laser beam of the intensity increasing and decreasing steps is set to a ratio of 0.8 to 0.9 to the steady intensity in the overlapped angular range.

5. The tube-body residual stress improving method according to any one of claims 1 to 4, wherein
the cycle of all the steps is performed twice or more, and the heated tube body is cooled down to ambient temperature after each cycle, and
the irradiation start and end angles on the tube body are shifted for each cycle.

6. The tube-body residual stress improving method according to claim 5, wherein
a temperature sensor measuring the temperature of the tube body is provided only at an angular position of an edge of an angular range which is subjected to the steady output step in every cycle, and
the maximum temperature of the tube body is monitored by using the temperature sensor at each cycle.

7. A tube-body residual stress improving system, comprising:
rotary moving means capable of rotationally moving around an outer circumference of a cylindrical tube body at a predetermined rotational speed;
laser beam irradiating means which is supported by the rotary moving means and which locally irradiates a laser beam onto an outer circumferential surface of a welded part of the tube body; and
control means which controls an intensity of the laser beam from the laser beam irradiating means and which also controls circumferential angular position and the rotational speed of the laser beam irradiating means rotated by the rotary moving means, wherein
the control means includes:
an output increasing step of gradually increasing an intensity of the laser beam to a steady intensity from any one of 0 and an intensity smaller than the steady intensity during rotation from an irradiation start angle to a first predetermined angle on the tube body, the steady intensity allowing a desired heated temperature to be achieved at the predetermined rotational speed;
a steady output step of setting the intensity of the laser beam to the steady intensity during rotation from the first predetermined angle to a second predetermined angle short of an irradiation end angle which is the same as the irradiation start angle;
an output decreasing step of gradually decreasing the intensity of the laser beam from the steady intensity to any one of 0 and an intensity smaller than the steady intensity during rotation from the second predetermined angle to the irradiation end angle; and
an output stop step of causing the intensity of the laser beam to reach 0 at the irradiation end angle, and
the control means performs all of the steps at one turn to rotate an area irradiated with the laser beam on the outer circumference of the tube body, thereby heating the entire circumference of the welded part for an improvement of residual stress around the entire circumference of the welded part.

8. A tube-body residual stress improving system, comprising:
rotary moving means capable of rotationally moving around an outer circumference of a cylindrical tube body at a predetermined rotational speed;
laser beam irradiating means which is supported by the rotary moving means and which locally irradiates a laser beam onto an outer circumferential surface of a welded part of the tube body; and
control means which controls an intensity of the laser beam from the laser beam irradiating means and which also controls circumferential angular position and the rotational speed of the laser beam irradiating means rotated by the rotary moving means, wherein
the control means includes:
an output increasing step of gradually increasing an intensity of the laser beam to a steady intensity from any one of 0 and an intensity smaller than the steady intensity during rotation from an irradiation start angle to a first predetermined angle on the tube body, the steady intensity allowing a desired heated temperature to be achieved at the predetermined rotational speed;
a steady output step of keeping the intensity of the laser beam at the steady intensity during rotation from the first predetermined angle to an irradiation end angle which is the same as the irradiation start angle; and
an output stop step of causing the intensity of the laser beam to reach 0 at the irradiation end angle, and
the control means performs all of the steps at one turn to rotate an area irradiated with the laser beam on the outer circumference of the tube body, thereby heating the entire circumference of the welded part for an improvement of residual stress around the entire circumference of the welded part.

9. A tube-body residual stress improving system, comprising:
rotary moving means capable of rotationally moving around an outer circumference of a cylindrical tube body at a predetermined rotational speed;
laser beam irradiating means which is supported by the rotary moving means and which locally irradiates a laser beam onto an outer circumferential surface of a welded part of the tube body; and
control means which controls an intensity of the laser beam from the laser beam irradiating means and which also controls circumferential angular position and the rotational speed of the laser beam irradiating means rotated by the rotary moving means, wherein
the control means includes:
a steady output step of setting an intensity of the laser beam to a steady intensity at an irradiation start angle on the tube body and keeping the intensity of the laser beam at the steady intensity during rotation from the irradiation start angle to a second predetermined angle short of an irradiation end angle which is the same as the irradiation start angle, the steady intensity allowing a desired heated temperature to be achieved at the predetermined rotational speed;
an output decreasing step of gradually decreasing the intensity of the laser beam from the steady intensity to any one of 0 and an intensity smaller than the steady intensity during rotation from the second predetermined angle to the irradiation end angle; and
an output stop step of causing the intensity of the laser beam to reach 0 at the irradiation end angle, and
the control means performs all of the steps at one turn to rotate an area irradiated with the laser beam on the outer circumference of the tube body, thereby heating the entire circumference of the welded part for an improvement of residual stress around the entire circumference of the welded part.

10. A tube-body residual stress improving system, comprising:
rotary moving means capable of rotationally moving around an outer circumference of a cylindrical tube body at a predetermined rotational speed;
laser beam irradiating means which is supported by the rotary moving means and which locally irradiates a laser beam onto an outer circumferential surface of a welded part of the tube body; and
control means which controls an intensity of the laser beam from the laser beam irradiating means and which also controls circumferential angular position and the rotational speed of the laser beam irradiating means rotated by the rotary moving means, wherein
the control means includes:
an output increasing step of gradually increasing an intensity of the laser beam from 0 to a steady intensity during rotation from an irradiation start angle to a first predetermined angle on the tube body, the steady intensity allowing a desired heated temperature to be achieved at the predetermined rotational speed;
a steady output step of keeping the intensity of the laser beam at the steady intensity during rotation from the first predetermined angle to a second predetermined angle which is short of the irradiation start angle; and
an output decreasing step of gradually decreasing the intensity of the laser beam from the steady intensity to 0 during rotation from the second predetermined angle to an irradiation end angle which is beyond the start angle, and
the control means performs all of the steps at more than one and less than two turns to rotate an area irradiated with the laser beam on the outer circumference of the tube body, thereby heating the entire circumference of the welded part for an improvement of residual stress around the entire circumference of the welded part, while angular ranges, of the tube body, respectively of the output increasing step and the output decreasing step overlap each other, and also a sum of the intensities of the laser beam of the intensity increasing and decreasing steps is set to a ratio of 0.8 to 0.9 to the steady intensity in the overlapped angular range.

11. The tube-body residual stress improving system according to any one of claims 7 to 10, wherein
the control means performs the cycle of all of the steps twice or more and cools the heated tube body down to ambient temperature after each cycle while changing the start and end angles of irradiation to the tube body for each cycle.

12. The tube-body residual stress improving system according to claim 11, wherein
a temperature sensor measuring the temperature of the tube body is provided at an angular position at an edge of an angular range which is subjected to the steady output step in every cycle, and
the control means monitors the maximum temperature of the tube body by using the temperature sensor at each cycle.
